# EUROPÄISCHE PATENTSCHRIFT

(11) **EP 1 521 679 B1**
(45) Veröffentlichungstag und Bekanntmachung des Hinweises auf die Patenterteilung: **30.11.2011**
(21) Anmeldenummer: 03787620.8
(22) Anmeldetag: 02.07.2003
(51) Int. Cl.: B42D 15/00, B42D 15/10

(54) **VERFAHREN ZUR HERSTELLUNG EINES OPTISCH VARIABLEN ELEMENTS MIT VARIIERENDER DISTANZSCHICHT-DICKE**
METHOD FOR MANUFACTURING AN OPTICAL VARIABLE ELEMENT HAVING A VARIABLE DISTANCE-LAYER THICKNESS
PROCÉDÉ DE FABRICATION D'UN ÉLÉMENT OPTIQUEMENT VARIABLE AVEC UNE COUCHE D'ESPACEMENT À ÉPAISSEUR VARIABLE

(30) Priorität: 17.07.2002 DE 10232245
(43) Veröffentlichungstag der Anmeldung: 13.04.2005
(73) Patentinhaber: Leonhard Kurz Stiftung & Co. KG, 90763 Fürth (DE)
(72) Erfinder: WILD, Heinrich, 91074 Herzogenaurach (DE); BREHM, Ludwig, 91325 Adelsdorf (DE)
(74) Vertreter: Zinsinger, Norbert
(86) Internationale Anmeldenummer: PCT/DE2003/002196
(87) Internationale Veröffentlichungsnummer: WO 2004/016441

(56) Entgegenhaltungen:
- WO-A1-2005/038136
- WO-A2-2005/015271
- US-A1- 2001 028 921

## Beschreibung

Die Erfindung betrifft ein Verfahren zur Herstellung eines optisch variablen Elements, insbesondere eines optisch variables Sicherungselement zur Sicherung von Banknoten, Kreditkarten und dergleichen, wobei das optisch variable Element eine Dünnfilmschichtfolge mit mindestens einer Distanzschicht zur Erzeugung von Farbverschiebungen mittels Interferenz aufweist.

Optisch variable Elemente werden häufig dazu genutzt, um den Mißbrauch von Dokumenten oder das Kopieren von Dokumenten zu erschweren und wenn möglich zu verhindern. Optisch variable Elemente finden so häufig Verwendung zur Sicherung von Banknoten, Ausweispapieren, Kreditkarten, Geldkarten und dergleichen. Weiter ist es möglich, sie auf Gegenstände aufzubringen und zur Echtheitserkennung von Waren zu verwenden.

Um das Kopieren von optisch variablen Elementen zu erschweren, ist es bekannt, ein optisch variables Element mit einer Dünnfilmschichtfolge auszustatten, die blickwinkelabhängige Verschiebung mittels Interferenz erzeugt.

So wird in WO 01/03945A1 ein Sicherheitsprodukt beschrieben, das ein durchsichtiges Substrat aufweist, auf dessen einer Seite ein Dünnfilm aufgetragen ist, der eine wahrnehmbare Farbverschiebung abhängig von der Blickwinkeländerung erzeugt. Der Dünnfilm besteht aus einer Absorptionsschicht, die auf dem durchsichtigen Substrat aufgebracht ist. Weiter besteht der Dünnfilm aus einer Dielektrizitätsschicht, die auf der Absorptionsschicht aufgebracht ist. Die Absorptionsschicht enthält ein Material, das aus einem der folgenden Materialien oder aus einer Legierung der folgenden Materialien besteht: Chrom, Nickel, Palladium, Titan, Kobalt, Eisen, Wolfram, Molybdän, Eisenoxid oder Kohlenstoff. Die Dielektrizitätsschicht besteht aus einem der folgenden Materialien oder aus einer Kombination der folgenden Materialien: Siliziumoxid, Aluminiumoxid, Magnesiumfluorid, Aluminiumfluorid, Bariumfluorid, Calciumfluorid oder Lithiumfluorid. Zur weiteren Erhöhung der Kopiersicherheit wird in WO 01/03945A1 weiter vorgeschlagen, auf die der Dünnfilmschicht gegenüberliegende Seite des transparenten Substrates ein Diffraktionsmuster aufzuprägen.

In EP 0660262B1 wird vorgeschlagen, eine Dünnfilmschichtfolge aus mehreren aufeinanderfolgenden Schichten mit unterschiedlichen Brechungsindizes aufzubauen. Bei diesen Schichten handelt es sich um Schichten aus keramischem Material, die aufeinanderfolgend auf ein Trägersubstrat aufgedampft werden. So wird auf einem Polyesterfilm mit der Dicke von 12 µm zuerst eine Ablöseschicht, bestehend aus thermoplastischem Acrylharz, dem Silikonöl zugegeben ist, aufgetragen. Sodann werden abwechselnd eine Magnesiumfluoridschicht, die einen niedrigen Brechungsindex hat, und eine Zinksulfidschicht, die einen hohen Brechungsindex hat, aufgedampft. Insgesamt werden hierbei fünf solche Schichten aufeinanderfolgend aufgedampft. Die Gesamtschichtdicke der so gebildeten Dünnfilmschichtfolge beträgt hierbei 1 µm. Auf die Dünnfilmschichtfolge wird sodann eine Klebeschicht aufgetragen.

Weiter wird in EP 0660262B1 vorgeschlagen, in die Ablöseschicht ein Muster einzugravieren. Hierdurch wird erreicht, daß beim Transfer der Dünnfilmschichtfolge auf einen Gegenstand oder ein Dokument sich die Dünnfilmschichtfolge nur in dem Bereich von dem Trägermaterial ablöst, in dem die Ablöseschicht vorhanden ist. Die Dünnfilmschicht bleibt in den anderen Bereichen an dem Trägermaterial kleben und reißt so ab. Dadurch wird erreicht, daß auf dem Gegenstand oder Dokument nur Teile der Dünnfilmschicht aufgeklebt werden. Derselbe Effekt kann auch dadurch erreicht werden, daß die Klebeschicht musterförmig aufgetragen wird.

Hierdurch wird erreicht, daß in einem ersten Teilbereich eine andere Anzahl von Dünnfilmschichten vorhanden ist als in einem zweiten Bereich und somit die Gesamtschichtdicke der Dünnfilmschichtfolge zwischen 1 µm (5 Dünnfilmschichten) und 0 (keine Dünnfilmschichten) variiert. Durch dieses "bereichsweise Auftragen" von Dünnfilmschichten auf einen Gegenstand kann auf diesem Gegenstand ein Muster erzeugt werden, das mittels einer Auswerteeinrichtung elektronisch erfaßt und ausgewertet werden kann.

In WO 02/00445A1 wird ein optisch variables Element beschrieben, das aus mehreren Schichten besteht, die durchgängig übereinander angeordnet sind. Das optisch variable Element weist zum einen eine Dünnfilmschichtfolge auf. Diese Dünnfilmschichtfolge erzeugt mittels Interferenz den Effekt eines blickwinkelabhängigen Farbwechsels. Weiter weist das optisch variable Element eine Replizierschicht auf, in die diffraktive Reliefstrukturen eingeprägt sind. Mittels dieser diffraktiven Strukturen lassen sich Beugungseffekte erzielen, durch die sich Hologramme und dergleichen darstellen lassen.

Fertigungstechnisch wird hierbei zuerst die Dünnfilmschichtfolge auf die Replizierschicht aufgebracht und sodann die Reliefstruktur aufgeprägt.

In WO 02/00445A1 wird vorgeschlagen, die Dünnfümschichtfolge aus einer Absorptionsschicht und einer Abstandsschicht aufzubauen. Weiter wird vorgeschlagen, eine vorfabrizierte Dünnfilmschichtfolge mit einem beprägbaren Lack zu versehen und in diesen Lack dann Reliefstrukturen einzuprägen. Als Alternative hierzu wird angegeben, die vorgefertigte Dünnfilmschichtfolge mit vorgefertigten Mikrostrukturen zu verkleben.

In US 2001/0028921 A1 wird ein optisch variables Element durch Aufdampf-Verfahren hergestellt: die Distanzschicht wird nicht gedruckt; somit verkörpert dieses Dokument den Oberbegriff des Anspruchs 1.

Der Erfindung liegt nun die Aufgabe zugrunde, ein optisch variables Element zu schaffen, das sich nur schwer nachahmen und kopieren läßt und mittels dem somit die Fälschungssicherheit von Sicherheitsprodukten verbessert werden kann.

Diese Aufgabe wird durch ein Verfahren gemäβ Anspruch 1 gelöst.

Durch die Erfindung wird der Vorteil erreicht, daß sich ein erfindungsgemäßes optisch variables Element wesentlich schwerer kopieren läßt, als dies bei den im Stand der Technik bekannten optisch variablen Elementen der Fall ist. Dadurch erhöht sich die Fälschungssicherheit von Sicherheitsprodukten erheblich, die mit einem mittels eines erfindungsgemäßen Verfahrens hergestellten optisch variablen Element ausgestattet sind. Durch die Erfindung lassen sich Muster mit gut erkennbaren, unmittelbar nebeneinander angeordneten oder ineinander greifenden Bereichen mit unterschiedlichen Farbverschiebungen erzeugen. Das Aufbringen einer Distanzschicht mit unterschiedlicher Schichtdicke erfordert einen hohen Technologieaufwand. Ein so erzeugtes Element stellt weiter gegenüber vorfabrizierten Dünnfilmfolie ein individualisiertes Element dar, so daß ausgehend von einer vorfabrizierten Dünnfilmfolie eine Nachahmung des optisch variablen Elements nicht möglich ist.

Damit ergeben sich insbesondere Vorteile gegenüber sandwichartig aufgebauten Flächenelementen. So kann beispielsweise das in WO 02/00445A1 beschriebene optisch variable Element - wie in WO 02/00445A1 als Möglichkeit der Herstellung beschrieben - dadurch nachgeahmt werden, daß eine vorfabrizierte Dünnfilmfolie mit einem Prägestempel bearbeitet wird, mit dem eine diffraktive Struktur in die Dünnfilmfolie eingeprägt wird.

Weitere Vorteile ergeben sich dadurch, daß der zur Gestaltung eines optisch variablen Elements zur Verfügung stehende Formenschatz vergrößert wird. So lassen sich beispielsweise fließende Übergänge erzeugen, bei denen sich die blickwinkelabhängigen Farbverschiebungen kontinuierlich ändern.

Vorteilhafte Ausgestaltungen der Erfindung sind in den Unteransprüchen bezeichnet.

Aus herstellungstechnischer Sicht ergeben sich Vorteile, wenn in dem ersten Bereich der Dünnfilmschichtfolge die Distanzschicht aus zwei oder mehr übereinander aufgebrachten Teilschichten besteht, die gemeinsam in diesem Bereich die Distanzschicht bilden, und im zweiten Bereich die Dünnfilmschichtfolge lediglich eine der zwei oder mehr Teilschichten aufweist, die die Distanzschicht in diesem Bereich der Dünnfilmschichtfolge bildet. Die Teilschichten bestehen vorzugsweise aus demselben Material. Es ist jedoch auch möglich, daß die Teilschichten aus unterschiedlichen Materialien mit denselben optischen Eigenschaften (insbesondere Brechungsindizes) geformt werden. Dies ist vorteilhaft, wenn verschiedene Teilschichten mit unterschiedlichen Verfahren aufgebracht werden und die verwendeten Materialien so an die Art und Weise der Aufbringung angepaßt werden können.

Interessante Effekte lassen sich hierbei dadurch erzielen, daß die zwei oder mehr übereinander aufgebrachten Teilschichten als unterschiedliche Muster geformt sind. Je nach Überlagerung dieser Muster entstehen somit unterschiedliche blickwinkelabhängige Farbverschiebungen in Teilbereichen des optisch variablen Elements. Durch die geschickte Gestaltung dieser Muster läßt sich auf fertigungstechnisch einfache Art und Weise eine Vielzahl von verschiedenartigen blickwinkelabhängigen Farbverschiebungen in einem optisch variablen Element realisieren.

Eine Erhöhung der Fälschungssicherheit kann weiter dadurch bewirkt werden, daß zumindestens eine der Teilschichten als Zufallsmuster ausgeformt ist. Auf diese Art und Weise wird ein individuelles optisch variables Element erzeugt, das auf seine Art einzigartig ist. Alternativ hierzu ist es auch möglich, daß die Schichtdicke der Distanzschicht insgesamt mit einer Zufallsfunktion beaufschlagt wird und somit ebenfalls der oben beschriebene Effekt erzeugt wird.

Die Distanzschicht kann weiter mit einem Mehrfachwalzensatz auf ein Substrat aufgedruckt werden, wodurch sich ebenfalls eine Schichtdickenverteilung ergibt, die zufällig ist.

Aus herstellungstechnischer Sicht ergeben sich Vorteile, wenn die zwei oder mehr übereinander aufgebrachten Teilschichten mittels eines Druckverfahrens aufgebracht werden. So können die in einem ersten Druckprozeß aufgebrachten Teilschichten in einem zweiten Druckprozeß überdruckt werden, wodurch sich in den Bereichen der Überdruckung die Schichtdicken der Teilschichten addieren und somit in diesem Bereich eine andersartige Farbverschiebung erzeugt wird.

Eine weitere, aus herstellungstechnischer Sicht zweckmäßige Art und Weise des Aufbringens der Distanzschicht besteht darin, daß unterschiedliche Muster im Register mit unterschiedlichen Schichtdicken auf das Substrat aufgedruckt werden.

Eine weitere Möglichkeit, die sowohl in Bezug auf die Gestaltungsmöglichkeiten als auch in Bezug auf die Erhöhung der Sicherheit Vorteile bringt, besteht darin, daß sich die Schichtdicke der Distanzschicht zwischen dem ersten Bereich und dem zweiten Bereich der Dünnfilmschichtfolge stetig ändert, so daß sich in diesem Bereich der Dünnfilmschichtfolge die von der Dünnfilmschichtfolge erzeugte Farbverschiebung kontinuierlich ändert. Weiter ist es auch möglich, daß die Schichtdicke der Distanzschicht sich zwischen dem ersten und dem zweiten Bereich der Dünnfilmschichtfolge kontinuierlich und/ oder nicht kontinuierlich ändert, so daß sich in diesem Bereich der Dünnfilmschichtfolge die von der Dünnfilmschichtfolge erzeugte Farbverschiebung kontinuierlich bzw. nicht kontinuierlich ändert.

Solche Effekte können hierbei dadurch realisiert werden, daß die Distanzschicht einerseits von einer auf einer makrostrukturierten Replizierschicht aufgebrachten Absorptionsschicht und andererseits von einer im Wesentlichen planaren Schicht begrenzt ist, so daß die Schichtdicke der Distanzschicht durch die makrostrukturierte Replizierschicht bestimmt ist. Die Distanzschicht füllt somit den Bereich zwischen der planaren Schicht und der makrostrukturierten Replizierschicht auf. Eine weitere Möglichkeit besteht darin, die Distanzschicht mittels einer Druckwalze aufzubringen, die so geformt ist, daß sich die Dicke der Distanzschicht kontinuierlich verändert.

Eine weitere Möglichkeit besteht darin, eine makrostrukturierte Distanzschicht mittels einer oberflächenstrukturierten Druckwalze zu erzeugt.

Die Distanzschicht ist somit zweckmäßig makrostrukturiert und einerseits von einer Absorptionsschicht und andererseits von einer Reflexionsschicht begrenzt.

Zweckmäßig ist es, daß die Dünnfilmschichtfolge eine reflektierende Schicht, vorzugsweise eine Metallschicht, aufweist. Durch diese Metallschicht wird erreicht, daß die von der Dünnfilmschichtfolge erzeugte blickwinkelabhängige Farbverschiebung besser erkennbar ist. Weitere Gestaltungsmöglichkeiten werden dadurch eröffnet, daß diese reflektierende Schicht den Flächenbereich der Dünnfilmschicht nur partiell abdeckt.

Vorteilhaft ist, die Dünnfilmschichtfolge mit einer Absorptionsschicht zu versehen, die als Absorptionsschicht und als Replizierschicht wirkt. Weiter ist es möglich eine Absorptionsschicht und die Replizierschicht vorzusehen, die aus demselben Material geformt sind.

Interessante Effekte lassen sich erzeugen, wenn die Schichtdicke der Distanzschicht im zweiten Bereich derart gewählt ist, daß die Kohärenz-Bedingung im Bereich des sichtbaren Lichts im zweiten Bereich nicht erfüllt ist. Ist die Kohärenz-Bedingung nicht mehr erfüllt, so treten keine Interferenzerscheinung mehr auf und der zweite Bereich wirkt als rein reflektierendes Element. Die Kohärenz-Bedingung und damit die zu wählende Schichtdicke hängt von der verwendeten Lichtquelle ab. Durch diese Vorgehensweise ist es möglich, auf fertigungstechnisch einfache und kostengünstige Art und Weise reflektierende Elemente zu erzeugen.

Weitere Gestaltungselemente zur Erhöhung der Fälschungssicherheit ergeben sich weiter dadurch, daß die Distanzschicht- ggf. nur partiell - eingefärbt wird.

Vorteilhaft ist, wenn das optisch variable Element eine durchgehende transparente Schicht, insbesondere eine Schutzlackschicht aufweist.

Im Folgenden wird die Erfindung anhand von mehreren Beispielen unter Zuhilfenahme der beiliegenden Zeichnungen beispielhaft erläutert. Die nichtbeanspruchten optisch variablen Elemente dienen dazu, das beanspruchte Hertellungsverfahren besser zu verstehen. Im Folgenden fallen unter den Schutzbereich der Erfindung nur die Herstellungsverfahren, in denen die Distanzschicht zumindest teilweise gedruckt wird.
- Fig. 1a: zeigt eine Darstellung eines Schnittes durch ein optisch variables Element für ein erstes Beispiel.
- Fig. 1b: zeigt eine Darstellung eines Schnittes durch ein erfindungsgemäßes optisch variables Element für ein zweites Ausführungsbeispiel der Erfindung.
- Fig. 2: zeigt eine Darstellung eines Schnittes durch ein optisch variables Element für ein drittes Beispiel.
- Fig. 3: zeigt eine Darstellung eines Schnittes durch ein optisch variables Element für ein viertes Beispiel.
- Fig. 4: zeigt eine Darstellung eines Schnittes durch ein optisch variables Element für ein fünftes Beispiel.
- Fig. 5: zeigt eine Darstellung eines Schnittes durch ein optisch variables Element für ein sechstes Beispiel.
- Fig. 6: zeigt eine Darstellung eines Schnittes durch ein optisch variables Element für ein siebtes Beispiel.

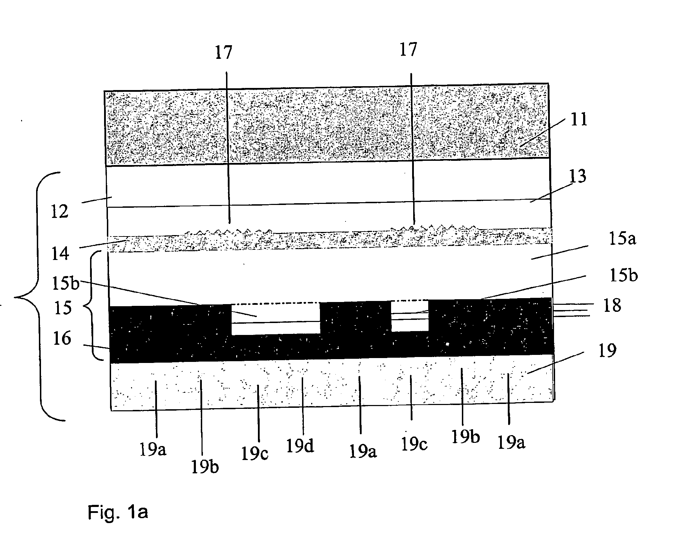

Fig. 1a zeigt einen Ausschnitt eines optisch variablen Elements 1, das noch Teil einer Folie, insbesondere einer Prägefolie, ist. Dieses optisch variable Element 1 ist dazu bestimmt, auf ein Sicherheitsprodukt, beispielsweise auf eine Banknote, eine Kreditkarte, eine Geldkarte oder ein Dokument aufgebracht zu werden. Weiter besteht die Möglichkeit, das optisch variable Element 1 als Sicherheits- oder Echtheitskennzeichnung auf einen Gegenstand, beispielsweise auf eine CD oder eine Verpackung aufzubringen.

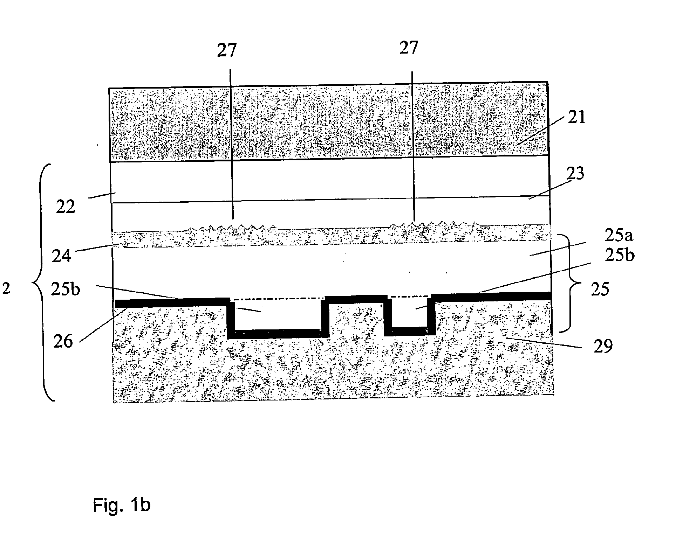

Neben dem optisch variablen Element 1 zeigt Fig. 1 a einen Träger 11. Der Träger 11 besteht beispielsweise aus PET. Der Träger 11 dient dem fertigungstechnischen Aufbringen des optisch variablen Elements auf das zu sichernde Objekt. Nach dem Aufbringen oder bei dem Aufbringen des optisch variablen Elements auf dem zu sichernden Objekt wird der Träger 11 entfernt. In Fig. 1a wird das optisch variable Element 1 somit in einem Stadium gezeigt, in dem es Teil einer Folie, beispielsweise einer Prägefolie oder einer Laminierfolie ist.

Das optisch variable Element 1 weist sechs Schichten 12 bis 19 auf.

Die Schicht 12 ist eine Schutzlackschicht und/ oder Ablöseschicht. Die Schicht 13 ist eine Replizierschicht. Die Schicht 14 ist eine Absorptionsschicht. Die Schicht 15 ist eine Distanzschicht, die von zwei Teilschichten 15a und 15b gebildet wird. Die Schicht 16 ist eine Reflexionsschicht, die von einer Metallschicht oder einer HRI-Schicht (HRI = High Refractive Index) gebildet wird. Die Schicht 19 ist eine Klebeschicht.

Im Fall, daß das optisch variable Element 1 Teil einer Laminierfolie ist, weist die Schicht 12 eine Haftvermittlungsschicht auf.

Die Schichten 14, 15 und 16 bilden eine Dünnfilmschichtfolge, die mittels Interferenz blickwinkelabhängige Farbverschiebungen erzeugt. Es bestehen hierbei verschiedene Möglichkeiten, eine Dünnfilmschichtfolge aufzubauen, mittels der solche blickwinkelabhängigen Farbverschiebungen mittels Interferenz erzeugt werden können:

Zum einen kann eine solche Dünnfilmschichtfolge, wie in Fig. 1 a gezeigt, von einer Absorptionsschicht (vorzugsweise mit 30 bis 65 % Transmission) einer transparenten Distanzschicht als farbwechselerzeugende Schicht (λ ¼ oder λ ½ Schicht) und einer reflektierenden Schicht (reflektierendes Element) oder mit einer optischen Trennschicht (transmissives Element) gebildet werden. Soll die Dünnfilmschichtfolge die Funktion eines reflektierenden Elements erfüllen, so ist die Schichtdicke der Distanzschicht so zu wählen, daß die Ä ¼ Bedingung erfüllt wird. Soll die Dünnfilmschichtfolge die Funktion eines transmissiven Elements erfüllen, so ist die Schichtdicke der Distanzschicht hier so zu wählen, daß die λ ½ Bedingung erfüllt wird. Hierbei wird λ so gewählt, daß λ vorzugsweise im Bereich des für einen menschlichen Betrachter sichtbaren Lichtes liegt.

Weiter ist es auch möglich, eine Dünnfilmschichtfolge, die blickwinkelabhängige Farbverschiebung mittels Interferenz erzeugt, aus einer Abfolge von hoch- und niedrigbrechenden Schichten aufzubauen. Bei einem derartigen Schichtaufbau kann auf die Verwendung einer Absorptionsschicht verzichtet werden.

Die hoch- und niedrigbrechenden Schichten einer solchen Dünnfilmschichtfolge bilden jeweils eine optisch wirksame Distanzschicht, die die oben beschriebenen Bedingungen einzuhalten hat. Je höher die Anzahl der Schichten gewählt wird, um so schärfer läßt sich die Wellenlänge für den Farbwechseleffekt einstellen.

Eine derartige Dünnfilmschichtfolge kann aus einer Vielzahl von niedrig- und hochbrechenden Schichten aufgebaut sein. Besonders vorteilhaft ist es jedoch, eine derartige Dünnfilmschichtfolge aus zwei bis zehn Schichten (geradzahlige Variante) oder drei bis neun Schichten (ungeradzahlige Variante) aufzubauen.

Beispiele üblicher Schichtdicken der einzelnen Schichten einer solchen Dünnfilmschichtfolge und Beispiele von Materialien, die für die Schichten einer solchen Dünnfilmschichtfolge prinzipiell verwendbar sind, werden beispielsweise in WO 01/03945, S. 5, Z. 30 bis S. 8, Z. 5, offenbart.

Auf den Träger 11 wird bei der Herstellung des optisch variablen Elementes 1 zuerst die Schutzlackschicht und/ oder Ablöseschicht 12 aufgebracht. Die Schutzlackschicht kann hierbei auch eingefärbt sein.

Anschließend wird die Replizierschicht 13 aufgebracht. Die Replizierschicht 13 besteht beispielsweise aus einem thermoplastischen Kunststoff. In die Replizierschicht 13 werden sodann mittels eines Prägewerkzeuges ein oder mehrere diffraktive Strukturen in den thermoplastischen Kunststoff der Replizierschicht 13 eingeprägt.

Auf die Ausstattung des optisch variablen Elements 1 mit der Replizierschicht 13 und/ oder auf das Einprägen von diffraktiven Strukturen könnte auch verzichtet werden. Die diffraktiven Strukturen dienen lediglich der weiteren Erhöhung der Sicherheit des optisch variablen Elements 1. Bei den diffraktiven Strukturen 17 handelt es sich vorzugsweise um diffraktive Strukturen, die mittels Beugungseffekten Hologramme und dergleichen erzeugen. Es ist jedoch auch möglich, daß anstelle von diffraktiven Strukturen Mattstrukturen, Makrostrukturen, achromatische-symmetrische Strukturen, beispielsweise Sinusgitter, achromatische-asymmetrische Strukturen, beispielsweise Blaze-Strukturen, oder Kinoforms in die Schicht 13 eingeprägt werden. Die diffraktiven Strukturen 17 können hierbei die Fläche des optisch variablen Elements vollflächig bedecken. Es ist jedoch auch möglich und für bestimmte Anwendungen sehr vorteilhaft, daß die diffraktiven Strukturen 17 die Fläche des optisch variablen Elements 1 nur teilweise bedecken.

Auf die Replizierschicht 13 wird nun die Absorptionsschicht 14 vorzugsweise vollflächig aufgetragen. Die Absorptionsschicht 14 kann hierbei durch Bedampfung oder durch Bedrucken aufgetragen werden.

Die Replizierschicht 13 und die Absorbtionsschicht 14 unterscheiden sich hierbei in ihrem Brechungsindex. Vorzugsweise besteht zwischen den Schichten 13 und 14 hierbei ein Brechungsindex-Unterschied von mindestens 0.2.

Es ist auch möglich, daß die Absorbtionsschicht und die Replizierschicht von einer einzigen Schicht gebildet werden.

Auf die Absorptionsschicht 14 wird nun die Teilschicht 15a durch Bedampfen vollflächig aufgetragen. Anschließend wird die Teilschicht 15b der Distanzschicht 15 bereichsweise und musterförmig auf die Teilschicht 15a aufgebracht.

Bei den Materialien, die für die Teilschichten 15a und 15b verwendet werden, handelt es sich vorzugsweise um dieselben Materialien. Es ist jedoch auch möglich, daß für die Teilschichten 15a und 15b Materialien mit im Wesentlichen übereinstimmenden optischen Eigenschaften (insbesondere Brechungsindex) verwendet werden. Für das bereichsweise Aufbringen der Teilschicht 15b gibt es hierbei mehrere Möglichkeiten:

Zum einen ist es möglich, die Teilschicht 15b mittels Bedampfungs-Masken, die Flächenbereiche des optisch variablen Elements 1 abdecken, bereichsweise auf die Teilschicht 15a aufzudampfen.

Weiter ist es möglich, die Teilschicht 15b vollflächig auf die Teilschicht 15a aufzudampfen und sodann die Teilschicht 15b in bestimmten Flächenbereichen wieder zu entfernen. Dies kann zum einen dadurch realisiert werden, daß ein Ätzmittel oder eine Ätzmaske auf die Teilschicht 15b aufgedruckt wird und sodann durch Positiv- oder Negativätzung und einen darauffolgenden Waschvorgang die Teilschicht 15b bereichsweise wieder entfernt wird. Für ein derartiges Vorgehen ist es vorteilhaft, wenn für die Teilschichten 15a und 15b Materialien mit unterschiedlichen chemischen Eigenschaften verwendet werden.

Weiter ist es möglich, daß die vollflächig aufgetragene Teilschicht 15b mittels eines Ablationsverfahrens, beispielsweise Laserablation, Plasma- oder Ionenbeschuß zu entfernen. Durch solche Ablationsverfahren ist es hierbei auch möglich, digital gespeicherte Bilder, Texte und Codes zu übertragen.

Im Weiteren besteht auch die Möglichkeit, auf die vollflächig aufgebrachte Teilschicht 15b die Schicht 16 vollflächig aufzubringen und sodann mittels einem der oben beschriebenen Verfahren (Positivätzung, Negativätzung, Ablation) sowohl die Schicht 16 als auch die Schicht 15b bereichsweise wieder zu entfernen.

Eine weitere Möglichkeit besteht auch darin, die Distanzschicht 15 nicht bereichsweise aus zwei Teilschichten 15a und 15b aufzubauen, sondern die Distanzschicht 15 vollflächig aufzubringen und dann bereichsweise durch eines der oben beschriebenen Verfahren (Positivätzung, Negativätzung, Ablation) in einer der Dicke der Teilschicht 15b entsprechenden Dicke wieder abzutragen.

Durch die oben beschriebenen Vorgehensweisen wird erreicht, daß in den Bereichen 19a und 19b der Dünnfilmschichtfolge die Distanzschicht 15 lediglich von der Teilschicht 15a gebildet wird und somit in diesem Bereich die Distanzschicht 15 die Dicke der Teilschicht 15a hat. In Bereichen 19c und 19d der Dünnfilmschichtfolge sind die Teilschichten 15a und 15b übereinander angeordnet und die Distanzschicht 15 hat somit eine Dicke, die sich aus der Gesamtdicke der Teilschichten 15a und 15b zusammensetzt. Damit wird in den Bereichen 19a und 19b von der Dünnfilmschichtfolge eine erste Farbverschiebung mittels Interferenz erzeugt, die abhängig von der Schichtdicke der Teilschicht 15a ist. In den Bereichen 19c und 19d wird von der Dünnfilmschichtfolge 15 eine von dieser Farbverschiebung unterschiedliche Farbverschiebung mittels Interferenz erzeugt, die von der Gesamtschichtdicke der Teilschichten 15a und 15b abhängig ist. Die Schichtdicken der Schichten 15a und 15b sind abhängig von den für die Schichten 15a und 15b gewählten Materialien nun so zu wählen, daß die Schichtdicke der Schicht 15a die λ ¼ oder λ ½ Bedingung für einen ersten, gewünschten Farbverschiebungseffekt erzeugt. Die Schichtdicke der Teilschicht 15b ist so zu wählen, daß die Gesamtschichtdicke der Schichten 15a und 15b (unter Umständen unter Berücksichtigung geringer Unterschiede der Brechungsindizes) die λ ¼ oder λ ½ Bedingung für einen zweiten gewünschten Farbverschiebungseffekt, der sich von dem ersten Farbverschiebungseffekt möglichst deutlich unterscheidet, zu erfüllen. Durch einen wie oben beschrieben erzeugten Aufbau einer Dünnfilmschichtfolge ist somit ein optisch variables Element realisierbar, bei dem sich Bereiche mit zwei unterschiedlichen Farbverschiebungseffekten abwechseln. Aus dem Aufbau der Distanzschicht aus zwei Teilschichten ergibt sich hierbei der Vorteil, daß die Schichtdicke der Distanzschicht in den verschiedenen Bereichen sehr konstant ist und somit ein konstanter, klar von einem benachbarten Bereich abgegrenzter Farbverschiebungseffekt erzeugt wird. Dies hat insbesondere bei Sicherheitsanwendungen Vorteile, bei denen für die Echtheitserkennung klar definierte und leicht erkennbare Sicherheitsmerkmale gefordert werden.

Weiter ist es möglich, die Distanzschicht 15 nicht aus zwei Teilschichten 15a und 15b aufzubauen, sondern die Distanzschicht 15 aus drei oder mehr Teilschichten aufzubauen. Dadurch ist es möglich, die Zahl der unterschiedlichen Farbverschiebungseffekte, die innerhalb eines optisch variablen Elementes verwendbar sind, entsprechend zu erhöhen.

Auf die Dünnfilmschichtfolge wird nun die Schicht 16 aufgebracht, bei der es sich um eine Metallschicht handelt. Als Metall für diese Metallschicht kann auch ein farbiges Metall gewählt werden. Als Materialien kommen im Wesentlichen Chrom, Aluminium, Kupfer, Eisen, Nickel, Silber oder Gold oder eine Legierung mit diesen Materialien in Frage.

Weiter ist es möglich, als Schicht 16 eine Schicht bestehend aus hochglänzenden oder reflektierenden Metallpigmenten aufzutragen.

Wie bereits oben geschildert, ist es hierbei möglich, nur eine partielle Schicht 16 vorzusehen. Die Schicht 16 kann beispielsweise vollflächig aufgebracht werden und durch eines der oben beschriebenen Verfahren (Positiv-, Negativätzung, Ablation) wieder entfernt werden. Andererseits ist es auch möglich, die Metallschicht durch Verwendung von Bedampfungs-Masken nur partiell aufzudampfen.

Anstelle der Verwendung einer Metallschicht für die Schicht 16 ist es auch möglich, die Schicht 16 als Transmissionsschicht auszubilden. In diesem Fall ist es auch möglich, daß die Schicht 16 mit der Schicht 19 verschmilzt, wenn als Klebeschicht ein Material verwendet wird, das die Bedingung einer Transmissionsschicht erfüllt.

Als Transmissionsschicht kommen insbesondere Materialien wie Oxide, Sulfide oder Chalkogenide in Frage. Entscheidend für die Wahl der Materialien ist, daß gegenüber den in der Abstandsschicht 15 verwendeten Materialien ein Unterschied im Brechungsindex besteht. Dieser Unterschied sollte vorzugsweise nicht geringer als 0,2 sein. Je nach den für die Distanzschicht 15 verwendeten Materialien wird so ein HRI-Material oder ein LRI-Material (HRE = High Refractive Index; LRE = Low Refractive Index) für die Schicht 16 eingesetzt.

Wenn die Dünnfilmschichtfolge, wie oben beschrieben, aus einer Abfolge von mehreren dielektrischen Schichten mit abwechselnd hohem und niedrigem Brechungsindex aufgebaut wird, so ist jede dieser Schichten wie die Schicht 15 auszubilden. Damit werden diese Schichten, wie für die Schicht 15 beschrieben, nacheinander durch vollflächiges bzw. bereichsweises Aufdampfen (oder Entfernen) von Teilschichten aufeinander aufgebaut.

Es ist auch möglich, in Bereichen 18, die die Bereiche zwischen der lediglich bereichsweisen ausgeformten Teilschicht 15b einnehmen, nicht mit der Metallschicht 16 auszufüllen, sondern in dieser Schicht ein sich von dem Brechungsindex der Distanzschicht 15 deutlich unterscheidendes transmissives Material vorzusehen. Damit wird es möglich, die Metallschicht 16 planar auszuformen. Dies kann beispielsweise dadurch realisiert werden, daß die Schicht 16 auf die Dünnfilmschichtfolge auflaminiert wird und die hierfür notwendige Haftvermittlungsschicht die oben beschriebene Bedingung bezüglich der Brechungsindizes erfüllt.

Für einen Betrachter des optisch variablen Elements 1 sind somit in den Oberflächenbereichen 19a bis 19d unterschiedliche Effekte erkennbar:

In dem Oberflächenbereich 19a ergibt sich ein erster blickwinkelabhängiger Farbverschiebungseffekt. In dem Oberflächenbereich 19b ist dieser Effekt von einem Beugungseffekt, beispielsweise einem Hologramm, überlagert. In dem Oberflächenbereich 19d ergibt sich für den Betrachter ein zweiter, sich von dem ersten Farbverschiebungseffekt unterscheidender, blickwinkelabhängiger Farbverschiebungseffekt. In dem Flächenbereich 19c wird dieser Farbverschiebungseffekt von einem Beugungseffekt, beispielsweise einem Hologramm, überlagert.

Fig. 1b zeigt ein optisch variables Element 2, das im Wesentlichen gleich wie das optisch variable Element 1 aufgebaut ist.

Das optisch variable Element 2 ist auf einem Träger 21 aufgebracht, der wie der Träger 11 ausgestaltet ist. Das optisch variable Element 2 weist fünf Schichten 22, 23, 24, 26 und 29 auf, die wie die Schichten 12, 13, 14, 15 und 16 ausgestaltet sind. In die Schicht 23 ist eine diffraktive Struktur 27 eingeprägt, die wie die diffraktiven Strukturen 17nach Fig. 1 a ausgestaltet sind.

Wie in Fig. 1b erkennbar, ist auf die von der Absorptionsschicht 24 und der Distanzschicht 25 mit den Teilschichten 25a und 25b gebildete

Dünnfilmschichtfolge eine dünne Metallschicht aufgedampft, die die Konturen der Distanzschicht 25 nachvollzieht. Die Metallschicht 26 hat hierbei an jeder Stelle in etwa dieselbe Dicke. Dieser Effekt ergibt sich auf einfache Weise, wenn auf die nach Fig. 1a hergestellte Dünnfilmschichtfolge eine sehr dünne Metallschicht aufgedampft wird. Die Distanzunterschiede, die durch die in unterschiedlicher Schichtdicke ausgebildete Distanzschicht entstehen, werden bei dem optisch variablen Element 2 durch die Klebeschicht 29 ausgeglichen.

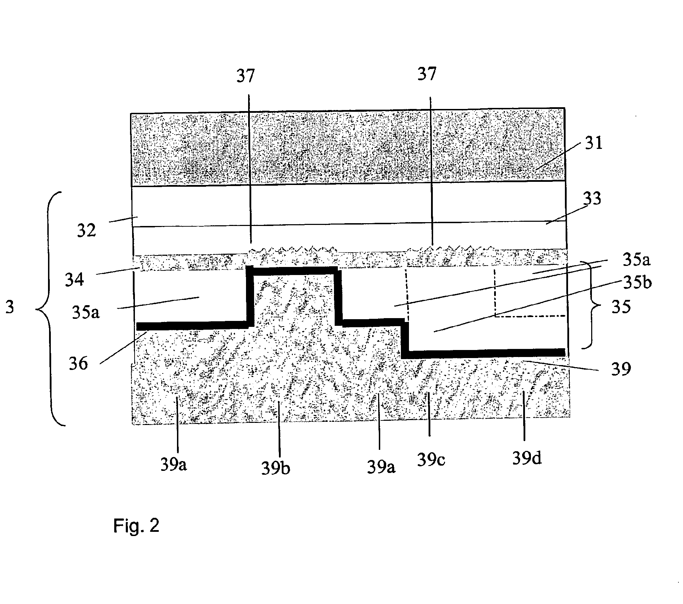

Fig. 2 zeigt nun eine weitere Möglichkeit, ein optisch variables Element mittels Bedampfungs-Masken zu erzeugen.

Fig. 2 zeigt ein optisch variables Element 3, das auf einem Träger 31 aufgebracht ist. Der Träger 31 ist hierbei wie der Träger 11 nach Fig. 1 a ausgestaltet.

Das optisch variable Element 3 weist sechs Schichten 32, 33, 34, 35, 36 und 39, zwei Teilschichten 35a und 35 b, diffraktive Strukturen 37 und mehrere Flächenbereiche 39a bis 39d auf.

Die Schicht 32 ist eine Ablöse- und/oder Schutzlackschicht. Die Schicht 33 ist eine Replizierschicht, in die die Diffraktionsstrukturen 37 eingeprägt sind. Die Schicht 34 ist eine Absorptionsschicht. Die Schicht 35 ist eine Distanzschicht, die von den Teilschichten 35a und 35a gebildet wird. Die Schicht 36 ist eine Metallschicht. Die Schicht 39 ist eine Klebeschicht. Die Schichten 32, 33, 34, 36 und 39 sowie die Teilschichten 35a und 35b sind vorzugsweise wie die Schichten 12, 13, 14, 16, 19 und die Teilschichten 15a bzw. 15b ausgebildet. Unterschiede bestehen jedoch in der Art und Weise, wie die Teilschichten 35a und 35b der Distanzschicht 35 auf der Absorptionsschicht 34 aufgebracht werden.

Auf die Absorptionsschicht 34 wird zuerst die Teilschicht 35a durch Bedampfung bereichsweise aufgebracht. Dies kann zum einen dadurch realisiert werden, daß unter Verwendung von Bedampfungs-Masken die Teilschicht 35a nur bereichsweise auf die Absorptionsschicht 34 aufgedampft wird. Weiter kann dies dadurch realisiert werden, daß die Teilschicht 35a vollflächig auf die Absorptionsschicht 34 aufgedampft wird und dann bereichsweise durch eines der oben beschriebenen Verfahren (Positivätzung, Negativätzung, Ablation) entfernt wird.

Die Teilschicht 35a ist nach der Beendigung des oben beschriebenen Verfahrens nur in den Flächenbereichen 39a und 39d auf die Absorptionsschicht 34 aufgebracht und fehlt in den Flächenbereichen 39c und 39b.

Im Folgenden wird nun die Teilschicht 35b aufgebracht. Die Teilschicht 35b wird hierbei ebenso nur bereichsweise auf die bereits vorhandenen Schichten aufgebracht. So wird die Teilschicht 35b lediglich in den Bereichen 39c und 39d auf die Absorptionsschicht 34 bzw. auf die Teilschicht 35a aufgebracht. Dieses bereichsweise Aufbringen der Teilschicht 35b kann mittels der für das bereichsweise Aufbringen der Teilschicht 15b nach Fig. 1a beschriebenen Verfahren durchgeführt werden.

In dem Flächenbereich 39a ist somit auf die Absorptionsschicht 34 lediglich die Teilschicht 35a aufgebracht, so daß sich die Dicke der Distanzschicht 35 in diesem Bereich aus der Schichtdicke der Teilschicht für 35a ergibt. In dem Flächenbereich 39b liegt keine Distanzschicht vor, so daß sich in diesem Flächenbereich keine blickwinkelabhängigen Farbverschiebungen ergeben. In dem Flächenbereich 39d liegen die beiden Teilschichten 35a und 35b übereinander, so daß die Distanzschicht 35 in diesem Bereich die Gesamtschichtdicke der beiden Teilschichten 35a und 35b aufweist. In dem Bereich 39c liegt lediglich die Teilschicht 35b vor.

Für das Aufbringen der Teilschicht 35b wird vorzugsweise eine strukturierte Druckwalze oder ein Bedampfungsverfahren gewählt, das eine Materialstärke auf die darunterliegenden Schichten aufträgt, die einer voreingestellten Abstandsdicke entspricht. Damit weist die Teilschicht 35b in dem Bereich 39c eine Schichtdicke auf, die dieser Abstandsschichtdicke und damit der Schichtdicke des Flächenbereiches 39d entspricht.

Für einen Betrachter des optisch variablen Elementes 3 ergeben sich somit in dem Flächenbereich 39a ein erster blickwinkelabhängiger Farbverschiebungseffekt und in den Flächenbereichen 39c und 39d ein zweiter, zu dem ersten Farbverschiebungseffekt unterschiedlicher Farbverschiebungseffekt. Diese Effekte werden in dem Flächenbereich 39c von optischen Effekten überlagert, die durch die diffraktive Struktur 37 erzeugt werden. In dem Flächenbereich 39b treten keine blickwinkelabhängigen Farbverschiebungseffekte durch die Dünnfilmfolge auf. In diesem Flächenbereich sind für den Betrachter lediglich die durch die diffraktive Struktur 37 erzeugten beugungsoptischen Effekte erkennbar.

Durch die anhand von Fig. 2 erläuterte Möglichkeit, auch die erste Teilschicht nur bereichsweise aufzubringen, bestehen somit vielfältige weitere Möglichkeiten, ein optisch variables Element zu gestalten. Die Möglichkeit, die erste Teilschicht nur bereichsweise aufzubringen, kann natürlich auch auf eine Distanzschicht angewendet werden, die aus mehr als zwei Teilschichten aufgebaut wird.

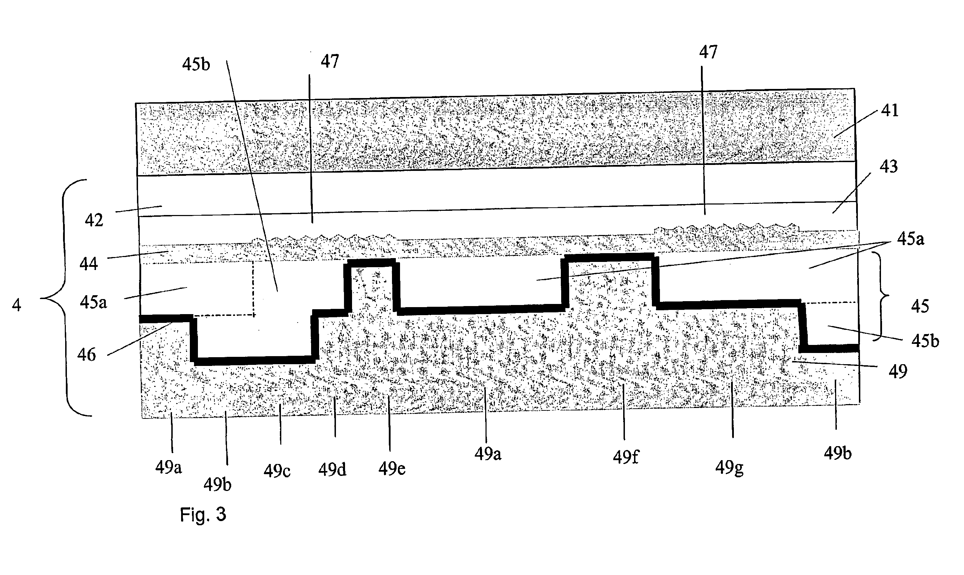

Anhand von Fig. 3 wird nun eine Möglichkeit aufgezeigt, ein optisch variables Element mittels einer aufgedruckten Distanzschicht zu erzeugen.

Fig. 3 zeigt ein optisch variables Element 4, das auf einem Träger 41 aufgebracht ist. Der Träger 41 ist wie der Träger 11 nach Fig. 1a ausgestaltet.

Das optisch variable Element 4 weist eine Ablöse- und Schutzlackschicht 42, eine Replizierschicht 43 mit diffraktiven Strukturen 47, eine Absorptionsschicht 44, eine Distanzschicht 45 mit Teilschichten 45a und 45b, eine Metallschicht 46, eine Klebeschicht 49 und mehrere Flächenbereiche 49a bis 49g auf.

Die Schichten 42, 43, 44, 46 und 49 sowie die diffraktiven Strukturen 47 sind wie die entsprechenden Schichten 12, 13, 14, 16 bzw. 19 sowie die diffraktiven Strukturen 17 nach Fig. 1a ausgestaltet.

Die Teilschichten 45a und 45b werden mittels eines Druckverfahrens auf den darunterliegenden Schichten aufgedruckt. So wird zuerst die Teilschicht 45a auf die Absorptionsschicht 44 aufgedruckt. Dieses Aufdrucken erfolgt hierbei partiell. Die Teilschicht 45a wird in den Flächenbereichen 49a, 49b und 49g, aber nicht in den Flächenbereichen 49c, 49d, 49e und 49f auf die Absorptionsschicht 44 aufgedruckt. Ein solches partielles Aufdrucken der Teilschicht 45a kann hier beispielsweise durch das Aufdrucken mit einer speziell ausgestalteten Druckwalze realisiert werden, die die Teilschicht 45a nur in den oben bezeichneten Flächenbereichen aufdruckt.

Es ist jedoch auch möglich, die Teilschicht 45a vollflächig auf die Absorptionsschicht 44 aufzudrucken und die Teilschicht 45a sodann bereichsweise partiell durch eines der oben beschriebenen Verfahren (Positivätzung, Negativätzung, Ablation) zu entfernen.

Im nächsten Schritt wird auf die darunterliegenden Schichten ebenfalls mittels eines Druckverfahrens die Teilschicht 45b aufgetragen. Wie aus Fig. 3 erkennbar ist, wird hierbei in dem Flächenbereich 49b die Teilschicht 45a von der Teilschicht 45b überdruckt und in den Flächenbereichen 49c und 49d die Teilschicht 45b direkt auf die Absorptionsschicht 44 gedruckt. Auch diese zweite, gedruckte Schicht, wird entweder nur partiell aufgedruckt oder mittels eines der oben beschriebenen Verfahren (Negativätzung, Positivätzung, Ablation) bereichsweise wieder entfernt. Wie im Flächenbereich 49c gezeigt, tritt bei einem Aufdrucken der Teilschicht 45b im Übergangsbereich zwischen dem Überdrucken der Teilschicht 45a und dem direkten Druck auf die Absorptionsschicht 44 eine vertikale Erhöhung der Teilschicht 45b ein, die in diesem Bereich zu einer Schichtdicke der Distanzschicht 45 führt, die in etwa der Gesamtschichtdicke der Teilschichten 45a und 45b entspricht.

Damit ergeben sich für den Betrachter des optisch variablen Elements 4 in den Flächenbereichen 49a, 49d und 49g erste blickwinkelabhängige Farbverschiebungseffekte, die in den Flächenbereichen 49d und 49g von den beugungsoptischen Effekten der diffraktiven Struktur 47 überlagert werden. In den Flächenbereichen 49b und 49c ergeben sich zweite blickwinkelabhängige Farbverschiebungseffekte, die sich von den ersten blickwinkelabhängigen Farbverschiebungseffekten deutlich unterscheiden. In dem Flächenbereich 49c wird dieser zweite blickwinkelabhängige Farbverschiebungseffekt von den beugungsoptischen Effekten überlagert, die von der diffraktiven Struktur 47 erzeugt werden. In dem Flächenbereich 49e ist keine Distanzschicht vorhanden und der Betrachter erkennt lediglich die durch die diffraktive Struktur 47 erzeugten beugungsoptischen Effekte. Der Flächenbereich 49f stellt sich für den Betrachter als reines reflektierendes Element dar.

Mittels dem oben beschriebenen Verfahren, Teilschichten der Distanzschicht 45 mittels eines Druckverfahrens aufzubringen, lassen sich eine Vielzahl von interessanten Effekten verwirklichen. So ist es beispielsweise möglich, ein oder mehrere der Teilschichten der Distanzschicht 45 mittels eines Zufallsprozesses bereichsweise aufzudrucken. Aufzudruckende Schichten können im Register oder zufällig zueinander verschoben aufgedruckt werden. Auch ist der Einsatz eines Mehrfachwalzensatzes möglich, mittels dem gezielt Zufallsmuster erzeugt werden können.

Weitere Vorteile ergeben sich dadurch, daß Teilschichten als repetierendes Muster gebildet werden können. Durch ein entsprechend ausgestaltetes Druckwerkzeug ist es so möglich, ein repetierendes, komplexes Muster mit hoher Arbeitsgeschwindigkeit auf die Absorptionsschicht 44 und/ oder auf ein oder mehrere bereits aufgedruckte Teilschichten der Distanzschicht aufzudrucken. Damit lassen sich auf wirtschaftlich sehr interessante Art und Weise optisch variable Elemente erzeugen, die recht komplexe Muster aufweisen, die von zwei oder mehr blickwinkelabhängigen Farbverschiebungseffekten gebildet werden.

Durch den Aufdruck eines Zufallsmusters ist weiter ein sogenannter Fingerprint erzeugbar. Hier wird die optische Schichtdicke der Teilschicht, die als Zufallsmuster ausgebildet ist, vorzugsweise in dem Bereich von 0,05 bis 2 µm gestaltet.

Natürlich ist es auch möglich, mit dem nach Fig. 3 beschriebenen Verfahren zur Herstellung der Distanzschicht 45 auch Dünnfilmschichtfolgen zu erzeugen, die aus mehreren dielektrischen Schichten mit unterschiedlichem Brechungsindex aufgebaut sind. Hierbei ist entsprechend wie in dem Beispiel zu Fig. 1a erläutert zu verfahren.

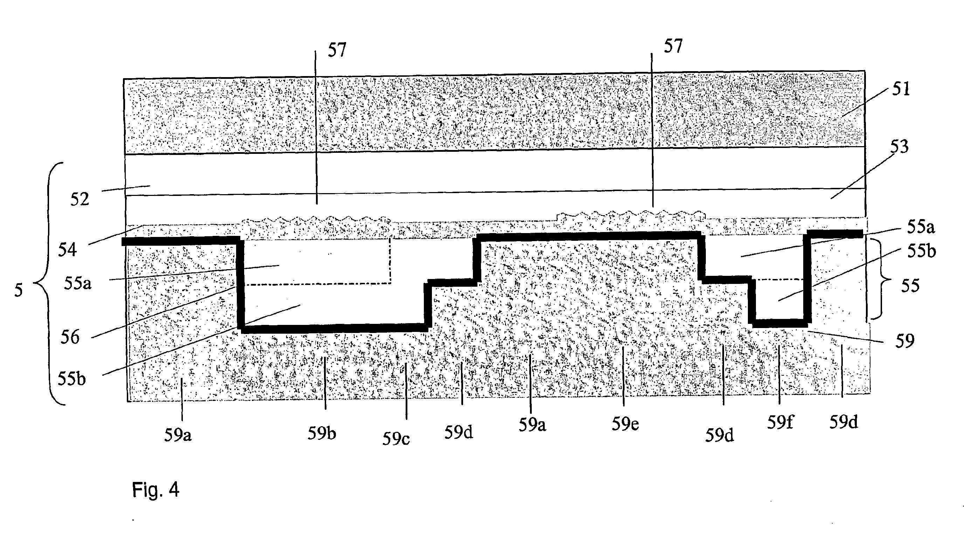

Anhand von Fig. 4 wird nun die Möglichkeit erörtert, die Distanzschicht eines optisch variablen Elementes aus Teilschichten aufzubauen, die zum einen aufgedampft werden und zum anderen mittels eines Druckverfahrens aufgetragen werden.

Fig. 4 zeigt das optisch variable Element 5, das auf einen Träger 51 aufgebracht ist. Der Träger 51 ist wie der Träger 11 nach Fig. 1 a ausgestaltet.

Das optisch variable Element 5 weist eine Ablöse- und Schutzlackschicht 52, eine Replizierschicht 53, eine Absorptionsschicht 54, eine Distanzschicht 55 mit zwei Teilschichten 55a und 55b, eine Metallschicht 56, eine Klebeschicht 59 und mehrere Flächenbereiche 59a bis 59f auf.

Die Schichten 52, 53, 54, 56 und 59 sind wie die entsprechenden Schichten 12, 13, 14, 16 bzw. 19 nach Fig. 1a ausgestaltet. Weiter sind in die Replizierschicht 53 diffraktive Strukturen 57 eingeprägt, die wie die diffraktiven Strukturen 17 nach Fig. 1a ausgestaltet sein können.

Auf die Absorptionsschicht 54 wird nun mittels eines Bedampfungsverfahrens die Teilschicht 55a aufgedampft. Hierbei ist es vorteilhaft, die Teilschicht 55a, wie in Fig. 4 gezeigt, nur bereichsweise und musterförmig auf die Absorptionsschicht 54 aufzubringen. Dies kann zum einen dadurch erreicht werden, daß mittels des Einsatzes von Bedampfungs-Masken die Teilschicht 55a nur in bestimmten Flächenbereichen aufgedampft wird. Weiter ist dies dadurch möglich, daß die Teilschicht 55a vollflächig auf die Absorptionsschicht 54 aufgedampft wird und sodann mittels eines der oben beschriebenen Verfahren (Positivätzung, Negativätzung, Ablation) bereichsweise entfernt wird.

Auf die so aufgedampfte Teilschicht 55a wird nun die Teilschicht 55b aufgedruckt. Hierbei kann in Flächenbereichen, beispielsweise in den Flächenbereichen 59b und 59c, ein Überdrucken der bereits aufgedampften Teilschicht 55a erfolgen. In anderen Flächenbereichen, beispielsweise in den Flächenbereichen 59c und 59d, wird die Teilschicht 55b direkt auf die Absorptionsschicht aufgedruckt. Wie in Fig. 4 erkennbar, ergibt sich im Flächenbereich 59c, wie bereits bei Fig. 3 beschrieben, eine Erhöhung der effektiven Schichtdicke der Teilschicht 55b durch den Überdruck über die Bereichsgrenze der Teilschicht 55a.

Durch die unterschiedliche Wahl der Schichtdicken der Teilschichten 55a und 55b lassen sich so Flächenbereiche mit unterschiedlicher Distanzschicht-Dicke erzeugen. In dem Flächenbereich 59b hat die Distanzschicht 55 eine Dicke, die der Gesamtschichtdicke der Teilschichten 55a und 55b entspricht. In dem Flächenbereich 59d hat die Distanzschicht eine Dicke, die der Schichtdicke der Teilschicht 55b entspricht. Im Bereich 59a sind durch geeignete Wahl der Reflexions- und Absorptionsmaterialien Spiegelschichten oder eingefärbte Flächen zu erzeugen. Ebenfalls sind im Bereich 59e gleichartige Flächen mit diffraktiven Effekten zu erzeugen. Je nach Wahl der Schichtdicken der Teilschichten 55a und 55b kann die Distanzschicht 55 somit in diesen unterschiedlichen Flächenbereichen drei unterschiedliche Schichtdicken einnehmen.

Somit kann mittels des nach Fig. 4 beschriebenen Verfahrens ein optisch variables Element realisiert werden, das Flächenbereiche mit drei unterschiedlichen blickwinkelabhängigen Farbverschiebungseffekten aufweist. Durch Erhöhung der Anzahl der Teilschichten, die aufgedampft oder aufgedruckt werden, kann entsprechend die Zahl der in dem optisch variablen Element 5 realisierten blickwinkelabhängigen Farbverschiebungseffekte erhöht werden.

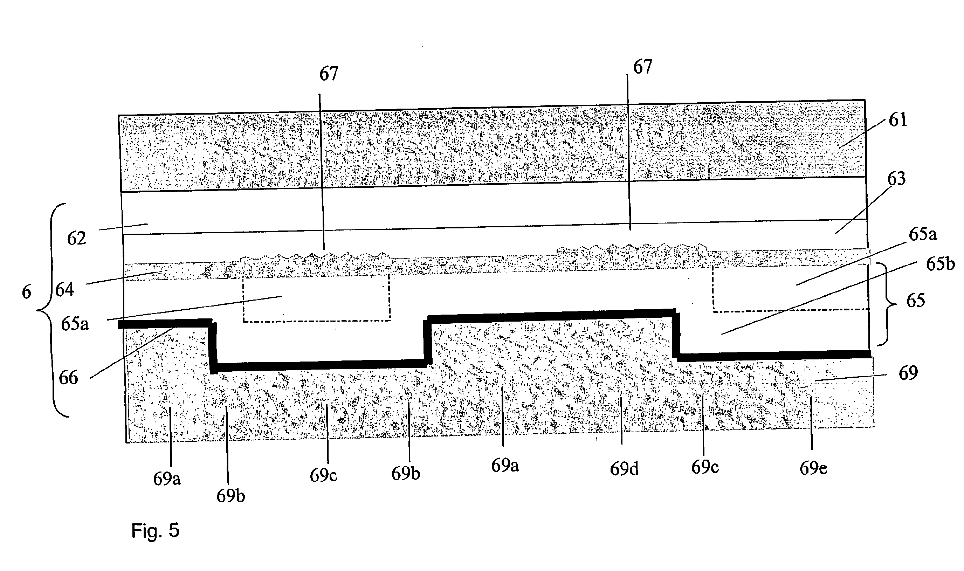

Anhand von Fig. 5 wird nun eine weitere Möglichkeit erläutert, eine Distanzschicht für ein erfindungsgemäßes optisch variables Element mittels unterschiedlicher Teilschichten aufzubauen.

Fig. 5 zeigt ein optisch variables Element 6, das auf einen Träger 61 aufgebracht ist. Der Träger 61 ist wie der Träger 11 nach Fig. 1a ausgestaltet.

Das optisch variable Element 6 weist eine Ablöse- und Schutzlackschicht 62, eine Replizierschicht 63, eine Absorptionsschicht 64, eine Distanzschicht 65 mit zwei Teilschichten 65a und 65b, eine Metallschicht 66 und eine Klebeschicht 69 auf. Weiter zeigt Fig. 5 mehrere Flächenbereiche 69a bis 69e.

Die Schichten 62, 63, 64, 66 und 69 sind wie die entsprechenden Schichten 12, 13, 14, 16 bzw. 19 nach Fig. 1a ausgestaltet. In die Replizierschicht 63 ist eine diffraktive Struktur 67 eingeprägt, die wie die diffraktive Struktur 17 nach Fig. 1a ausgestaltet sein kann.

Die Teilschicht 65a wird nun mittels eines Druckverfahrens auf die Absorptionsschicht 64 aufgebracht. Hierbei ist es vorteilhaft, daß die Teilschicht 65a nur bereichsweise aufgedruckt wird.

Wie in Fig. 5 gezeigt, wird die Teilschicht 65a lediglich in den Flächenbereichen 69c und 69e auf der Absorptionsschicht 64 aufgedruckt. Dieses partielle Aufdrucken der Teilschicht 65a kann mittels entsprechend ausgestalteter Druckwalzen realisiert werden. Es ist jedoch auch möglich, die Teilschicht 65a vollflächig auf die Absorptionsschicht 64 aufzudrucken und dann mittels eines der oben beschriebenen Verfahren (Positivätzung, Negativätzung, Ablation) bereichsweise wieder zu entfernen.

Auf die vorliegende Schichtfolge wird nun die Teilschicht 65b vollflächig aufgedampft. Damit wird in den Flächenbereichen 69c und 69e die darunterliegende, aufgedruckte Teilschicht 65a überdampft und in den Flächenbereichen 69a, 69b, 69d und 69c die Teilschicht 65b auf die Absorptionsschicht 64 aufgedampft. In dem Flächenbereich 69b ergibt sich die bereits oben beschriebene Erhöhung der effektiven Schichtdicke der Teilschicht 65b.

Das in Fig. 5 dargestellte Beispiel stellt ein aus wirtschaftlichen Gesichtspunkten besonders interessantes Beispiel dar. So ist es mittels eines entsprechenden ausgestalteten Druckwerkzeuges möglich, die Teilschicht 65a in einfacher Weise schnell und kostengünstig musterförmig auf die Distanzschicht 64 aufzudrucken. Weiter stellt das vollflächige Aufdampfen der Teilschicht 65b einen Standardprozeß dar, der ebenfalls kostengünstig und schnell realisiert werden kann. Damit stellt die in Fig. 5 dargestellte Lösung eine besonders kostengünstige Realisierung eines optisch variablen Elements dar, mittels der es möglich ist, zwei unterschiedliche blickwinkelabhängige Farbverschiebungseffekte auf einem optisch variablen Element zu realisieren.

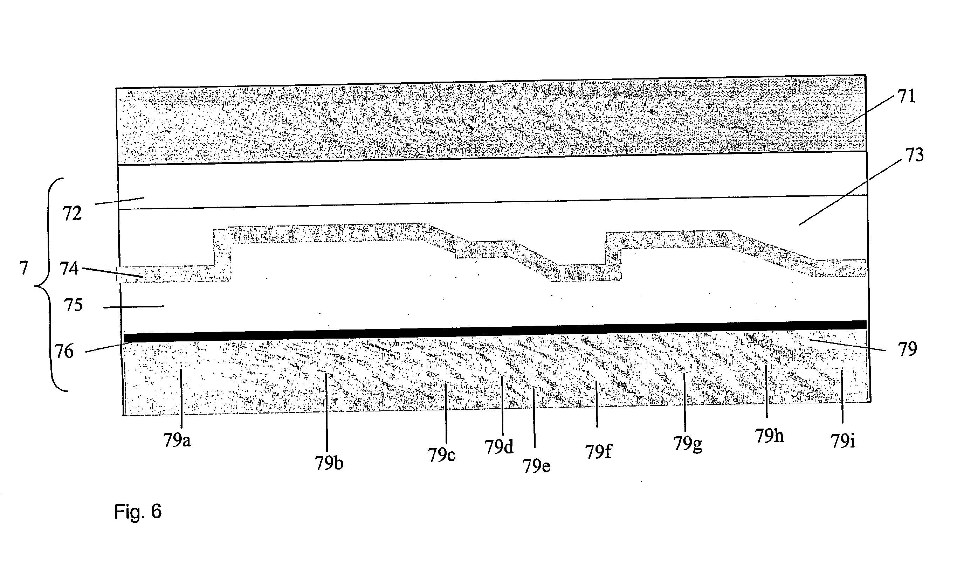

Anhand von Fig. 6 wird nun eine Möglichkeit aufgezeigt, ein optisch variables Element mit variierender Distanzschicht-Dicke zu realisieren, ohne die Distanzschicht aus zwei oder mehr Teilschichten aufzubauen.

Fig. 6 zeigt ein optisch variables Element 7, das auf einem Träger 71 aufgebracht ist. Der Träger 71 ist wie der Träger 11 nach Fig. 1 a ausgestaltet.

Das optisch variable Element 7 weist eine Ablöse- und/ oder Schutzlackschicht 72, eine Replizierschicht 73, eine Absorptionsschicht 74, eine Distanzschicht 75, eine Metallschicht 76 und mehrere Flächenbereiche 79a bis 79i auf.

Die Schichten 72, 74, 76 und 79 sind wie die entsprechenden Schichten 11, 12, 14, 16 bzw. 19 nach Fig. 1a ausgestaltet.

Die Replizierschicht 73 besteht aus einem thermoplastischen Material. In dieses thermoplastische Material wird mittels eines Prägewerkzeugs oder mittels Ablation eine Makrostruktur eingebracht, die wie in Fig. 6 dargestellt ausgestaltet ist. Anschließend wird auf die Replizierschicht 73 die Absorptionsschicht 74 aufgedampft. Auf die Absorptionsschicht 74 wird nun die Distanzschicht 75 aufgebracht. Für die Distanzschicht 75 können hierbei die in dem Beispiel nach Fig. 1a geschilderten Materialien der Distanzschicht 15 verwendet werden.

Die Distanzschicht 75 kann hierbei entweder durch Bedampfen oder durch Bedrucken aufgebracht werden. Weiter ist es möglich, einen Lack auf die Absorptionsschicht aufzubringen, der über die in dem Beispiel nach Fig. 1a geschilderten optischen Eigenschaften der Distanzschicht 15 verfügt.

Die Distanzschicht 75 wird nun derart bearbeitet, daß ihre der Absorptionsschicht 74 gegenüberliegende Oberfläche weitgehend planar ist. Dies kann zum einen dadurch realisiert werden, daß die Distanzschicht 75 in einem noch nicht ganz ausgehärteten Zustand mittels eines Druckwerkzeugs in die entsprechende Form gebracht wird. Weiter ist es möglich, daß durch einen abtragenden Vorgang die Distanzschicht 75 diese entsprechende Form erhält.

Weiter ist es möglich, als Distanzschicht 75 einen UV aushärtbaren Lack aufzubringen. Beim Auftragen des Lacks ist dieser Lack noch flüssig, wodurch sich auf der der Absorptionsschicht 74 gegenüberliegenden Oberfläche eine weitgehend planare Oberfläche ergibt. Anschließend wird der Lack mittels UV Strahlung ausgehärtet. Auch ein an der Luft aushärtender Lack ist verwendbar. Hierbei ist darauf zu achten, daß das Endvolumen des aufgebrachten Lacks nach Austrocknung größer als das Strukturvolumen der Makrostruktur ist.

Als nächster Schritt wird sodann die Metallschicht 75 aufgebracht. Bezüglich der Metallschicht 76 ist es auch möglich, die in dem Beispiel nach der Fig. 1 a geschilderten Alternativen (partielle Metallschicht, hochreflektierende Schicht, optische Trennschicht) zu realisieren.

Anschließend wird die Klebeschicht 79 aufgebracht.

Wie anhand von Fig. 6 erkennbar, ergeben sich so in unterschiedlichen Flächenbereichen des optisch variablen Elements 7 jeweils unterschiedliche blickwinkelabhängige Farbverschiebungseffekte:

Die Schichtdicke der Distanzschicht ist in den Flächenbereichen 79a, 79b, 79d, 79f, 79g und 79i jeweils unterschiedlich. Damit ergeben sich in diesen Flächenbereichen jeweils unterschiedliche blickwinkelabhängige Farbverschiebungseffekte. In den Flächenbereichen 79c, 79e und 79h ändert sich die Schichtdicke der Distanzschicht 75 jeweils kontinuierlich. Damit ergibt sich für den Betrachter des optisch variablen Elementes 7 in diesen Bereichen ein stetiger, kontinuierlicher Übergang der blickwinkelabhängigen Farbverschiebungseffekte.

Es ist auch möglich, den in Fig. 6 dargestellten Verlauf der Schichtdicke der Distanzschicht 75 auf andere Weise zu erreichen: So ist es möglich, durch den Aufdruck einer Distanzschicht auf eine planare Absorptionsschicht durch die Verwendung entsprechender Druckwalzen einen ähnlichen Verlauf der Schichtdicke zu erreichen, wie er in Fig. 6 dargestellt ist. In diesem Falle ist jedoch die Oberfläche der Distanzschicht, die an die Absorptionsschicht anschließt, planar und die Oberfläche der Distanzschicht, die an die Metallschicht anschließt, entsprechend wie in Fig. 6 dargestellt, strukturiert ausgebildet. Diese durch das Druckverfahren strukturiert aufgebrachte Distanzschicht wird sodann mit einer Metallschicht bedampft und mit einer Klebeschicht versehen, die die Distanzunterschiede, die ebenfalls bei der Metallschicht vorliegen, ausgleichen.

Auch dieses Verfahren ist bei einer Dünnfilmschichtfolge einsetzbar, bei der die Dünnfilmschichtfolge aus mehreren dielektrischen Schichten mit unterschiedlichen Brechungsindizes aufgebaut ist.

## Patentansprüche

1. Verfahren zur Herstellung eines optisch variablen Elements (3, 4, 5, 6), insbesondere eines optisch variablen Sicherungselements zur Sicherung von Banknoten, Kreditkarten und dergleichen, wobei auf einem Substrat eine Dünnfilmschichtfolge mit mindestens einer Distanzschicht (35, 45, 55, 65) zur Erzeugung von Farbverschiebungen mittels Interferenz aufgebracht wird, wobei in einem ersten Bereich der Dünnfilmschichtfolge die Distanzschicht (35, 45, 55, 65) in einer anderen Schichtdicke ausgeformt wird als in einem zweiten Bereich der Dünnfilmschichtfolge, wobei die Schichtdicken der Distanzschicht (35, 45, 55, 65) im ersten und im zweiten Bereich derart gewählt werden, dass im ersten Bereich der Dünnfilmschichtfolge eine erste Farbverschiebung mittels Interferenz erzeugt wird und im zweiten Bereich der Dünnfilmschichtfolge eine sich von der ersten Farbverschiebung unterscheidende zweite Farbverschiebung erzeugt wird,
**dadurch gekennzeichnet,**
**dass** die Distanzschicht (35, 45, 55, 65) zumindest teilweise gedruckt wird.

2. Verfahren nach Anspruch 1,
**dadurch gekennzeichnet,**
**dass** zur Erzeugung der Distanzschicht (35, 45, 55, 65) zwei oder mehr Teilschichten (35a, 35b; 45a, 45b; 55a, 55b; 65a, 65b) übereinander aufgebracht werden, wobei im zweiten Bereich der Dünnfilmschichtfolge die Distanzschicht (35, 45, 55, 65) von zwei oder mehr der Teilschichten (35a, 35b; 45a, 45b; 55a, 55b; 65a, 65b) gebildet wird und sich so die Schichtdicke der Teilschichten (35a, 35b; 45a, 45b; 55a, 55b; 65a, 65b) addieren und im ersten Bereich der Dünnfilmschichtfolge die Distanzschicht (35, 45, 55, 65) von lediglich einer der Teilschichten (35a, 35b; 45a, 45b; 55a, 55b; 65a, 65b) gebildet wird.

3. Verfahren nach Anspruch 2,
**dadurch gekennzeichnet,**
**dass** ein oder mehrere der Teilschichten (35a, 35b; 55a, 55b; 65a, 65b) aufgedampft werden und dass ein oder mehrere der Teilschichten (35a, 35b; 55a, 55b; 65a, 65b) mittels eines Druckverfahrens aufgedruckt werden.

4. Verfahren nach Anspruch 2,
**dadurch gekennzeichnet,**
**dass** die Teilschichten (45a, 45b) mittels eines Druckverfahrens aufgedruckt werden.

5. Verfahren nach Anspruch 1,
**dadurch gekennzeichnet,**
**dass** die Distanzschicht mittels eines Mehrfachwalzensatzes auf das Substrat aufgedruckt wird, so dass eine Schichtdicke der Distanzschicht sich zufällig ändert.

6. Verfahren nach Anspruch 1,
**dadurch gekennzeichnet,**
**dass** zur Bildung der Distanzschicht unterschiedliche Muster im Register mit unterschiedlicher Schichtdicke auf das Substrat aufgedruckt werden.

## Claims

1. Method for producing an optically variable element (3, 4, 5, 6), in particular an optically variable security element for securing banknotes, credit cards and the like, wherein a thin-film layer sequence with at least one spacer layer (35, 45, 55, 65) is applied on a substrate in order to produce colour shifts by way of interference, wherein in a first region of the thin-film layer sequence the spacer layer (35, 45, 55, 65) is formed with a different layer thickness than in a second region of the thin-film layer sequence, wherein the layer thicknesses of the spacer layer (35, 45, 55, 65) in the first and in the second region are chosen such that in the first region of the thin-film layer sequence a first colour shift is produced by way of interference and in the second region of the thin-film layer sequence a second colour shift that differs from the first colour shift is produced, **characterized in that** the spacer layer (35, 45, 55, 65) is at least partially printed.

2. Method according to Claim 1, **characterized in that** for producing the spacer layer (35, 45, 55, 65), two or more partial layers (35a, 35b; 45a, 45b; 55a, 55b; 65a, 65b) are placed one above another, wherein in the second region of the thin-film layer sequence the spacer layer (35, 45, 55, 65) is formed by two or more of the partial layers (35a, 35b; 45a, 45b; 55a, 55b; 65a, 65b) and thus the layer thickness of the partial layers (35a, 35b; 45a, 45b; 55a, 55b; 65a, 65b) add up, and in the first region of the thin-film layer sequence the spacer layer (35, 45, 55, 65) is formed by only one of the partial layers (35a, 35b; 45a, 45b; 55a, 55b; 65a, 65b).

3. Method according to Claim 2, **characterized in that** one or more of the partial layers (35a, 35b; 55a, 55b; 65a, 65b) are applied by way of vapour deposition and **in that** one or more of the partial layers (35a, 35b; 55a, 55b; 65a, 65b) are printed on using a printing method.

4. Method according to Claim 2, **characterized in that** the partial layers (45a, 45b) are printed on using a printing method.

5. Method according to Claim 1, **characterized in that** the spacer layer is printed onto the substrate using a multiple-roller set such that a layer thickness of the spacer layer changes at random.

6. Method according to Claim 1, **characterized in that** different patterns are printed in register with different layer thicknesses onto the substrate in order to form the spacer layer.

## Revendications

1. Procédé de fabrication d'un élément optiquement variable (3, 4, 5, 6), en particulier d'un élément de sécurité optiquement variable pour la protection de billets de banque, cartes de crédit et similaires, sachant qu'une suite de couches de film mince avec au moins une couche d'espacement (35, 45, 55, 65) est appliquée sur un substrat pour la génération de décalages de couleur par interférence, sachant que dans une première zone de la suite de couches de film mince, la couche d'espacement (35, 45, 55, 65) est démoulée dans une autre épaisseur de couche que dans une seconde zone de la suite de couches de film mince, sachant que les épaisseurs de la couche d'espacement (35, 45, 55, 65) sont choisies dans la première et la seconde zone de telle manière que dans la première zone de la suite de couches de film mince, un premier décalage de couleur soit généré par interférence et dans la seconde zone de la suite de couches de film mince, un second décalage de couleur se différenciant du premier décalage de couleur soit généré, **caractérisé en ce que** la couche d'espacement (35, 45, 55, 65) est au moins en partie imprimée.

2. Procédé selon la revendication 1, **caractérisé en ce que** deux ou plusieurs couches partielles (35a, 35b ; 45a, 45b ; 55a, 55b ; 65a, 65b) sont appliquées les unes sur les autres pour la génération de la couche d'espacement (35, 45, 55, 65), sachant que dans la seconde zone de la suite de couches de film mince, la couche d'espacement (35, 45, 55, 65) est constituée de deux ou plusieurs des couches partielles (35a, 35b ; 45a, 45b ; 55a, 55b ; 65a, 65b) et les épaisseurs des couches partielles (35a, 35b ; 45a, 45b ; 55a, 55b ; 65a, 65b) s'ajoutent ainsi et la couche d'espacement (35, 45, 55, 65) dans la première zone de la suite de couches de film mince est juste constituée d'une des couches partielles (35a, 35b ; 45a, 45b ; 55a, 55b ; 65a, 65b).

3. Procédé selon la revendication 2, **caractérisé en ce qu'**une ou plusieurs des couches partielles (35a, 35b ; 55a, 55b ; 65a, 65b) sont métallisées sous vide et **en ce qu'**une ou plusieurs des couches partielles (35a, 35b ; 55a, 55b ; 65a, 65b) sont imprimées à l'aide d'un procédé d'impression.

4. Procédé selon la revendication 2, **caractérisé en ce que** les couches partielles (45a, 45b) sont imprimées à l'aide d'un procédé d'impression.

5. Procédé selon la revendication 1, **caractérisé en ce que** la couche d'espacement est imprimée par une série de cylindres multiples sur le substrat de sorte qu'une épaisseur de la couche d'espacement se modifie par hasard.

6. Procédé selon la revendication 1, **caractérisé en ce que** différents modèles dans le registre avec une épaisseur de couche différente sont imprimés sur le substrat pour la formation de la couche d'espacement.
